# FASCICULE DE BREVET EUROPEEN

(11) **EP 2 993 371 B1**
(45) Date de publication et mention de la délivrance du brevet: **13.09.2017**
(21) Numéro de dépôt: 15180079.4
(22) Date de dépôt: 06.08.2015
(51) Int. Cl.: F16D 25/12, F16D 25/0638, F16D 21/06

(54) **EMBRAYAGE POUR DOUBLE EMBRAYAGE HUMIDE**
KUPPLUNG FÜR DOPPELNASSKUPPLUNG
CLUTCH FOR DUAL WET CLUTCH

(30) Priorité: 08.09.2014 FR 1458404
(43) Date de publication de la demande: 09.03.2016
(73) Titulaire: Valeo Embrayages, 80009 Amiens Cedex 2 (FR)
(72) Inventeur: ARHAB, Rabah, 95350 ST BRICE SOUS FORET (FR); RIBOT, Herve, 80200 PERONNE (FR); CAUMARTIN, Laurent, 80600 BEAUQUESNE (FR)
(74) Mandataire: Cardon, Nicolas

(56) Documents cités:
- EP-A2- 1 482 195
- DE-A1- 3 725 492
- US-A1- 2010 320 050
- US-A1- 2013 153 355

## Description

La présente invention concerne un embrayage pour double embrayage humide.

Un tel embrayage est destiné à constituer une partie d'un système de transmission, notamment pour un véhicule automobile ou pour un véhicule dit industriel, ce dernier étant par exemple un poids lourd, un véhicule de transport en commun, ou un véhicule agricole.

Chaque embrayage d'un double embrayage humide comprend des lamelles d'entrée aptes à venir en contact avec des lamelles de sortie pour transmettre par friction un couple d'un organe menant vers un organe mené. Les lamelles sont maintenues au contact de l'huile, de manière à rester humides et à refroidir l'embrayage correspondant. L'huile venant au contact des lamelles provient par exemple d'une chambre alimentée en huile depuis un moyeu creux, ladite chambre étant en partie délimitée par un piston dont le déplacement permet de modifier l'état d'un des embrayages.

Il existe un besoin pour bénéficier d'un embrayage pour double embrayage humide dans lequel les lamelles impliquées dans la transmission du couple par friction sont convenablement maintenues humides, en réduisant les pertes d'huile non souhaitées et sans générer un coût excessif.

L'invention a pour objet de répondre à ce besoin et elle y parvient, selon un premier aspect, à l'aide d'un premier embrayage pour double embrayage humide, tel que définit dans la revendication 1. Selon ce premier aspect de l'invention, le liquide, par exemple issu d'une chambre d'équilibrage délimitée axialement d'un côté par un premier piston dont le déplacement permet de mettre en contact les premières lamelles d'entrée avec les premières lamelles de sortie et d'un autre côté en partie par un premier piston d'équilibrage, gagne le canal ménagé entre la partie axiale de l'organe menant et la partie axiale du premier support de lamelles d'entrée. La présence du bouchon dans le canal permet que le liquide circulant dans ce dernier gagne ensuite l'espace occupé par les lamelles, de manière à maintenir celles-ci humides et à refroidir le premier embrayage correspondant. Le bouchon réduit ainsi, voire supprime, la quantité de liquide circulant dans le canal ne venant pas ensuite au contact des lamelles. Dans le cas optimal, le flux de fuite d'huile vers l'extérieur des lamelles est annulé.

Le canal peut s'étendre tout autour de l'axe de rotation de l'organe menant. Le canal est par exemple délimité radialement intérieurement et radialement extérieurement par deux surfaces globalement cylindriques, le terme « globalement cylindrique » englobant une surface cylindrique dans laquelle est ménagée une alternance de rainures et de nervures formant des dents.

Le premier support de lamelles d'entrée peut comprendre une pluralité de passages se succédant sur un pourtour dudit support, ce pourtour présentant une alternance de nervures et de rainures. Entre vingt et cinquante nervures sont par exemple ménagées dans ce pourtour, par exemple quarante nervures. Autrement dit, des dents peuvent être ménagées par une partie au moins du premier support de lamelles d'entrée.

Le ou les passages peuvent être ménagés dans les nervures et être axialement entre deux premières lamelles d'entrée. On favorise ainsi l'écoulement du liquide au contact des lamelles et donc le maintien à l'état humide de celles-ci, ainsi que le refroidissement du premier l'embrayage. Un passage est par exemple ménagé dans chaque nervure. Le cas échéant, la position axiale des passages peut différer entre deux passages consécutifs angulairement, cette position axiale restant cependant toujours à hauteur d'un espace entre deux premières lamelles d'entrée. Le cas échéant, un passage est ménagé en regard de chaque espace entre deux premières lamelles d'entrée. Le bouchon est alors disposé axialement au-delà du passage le plus éloigné axialement de l'entrée du canal.

L'organe menant peut être dépourvu de telles nervures et rainures, la surface radialement extérieure de sa partie axiale étant alors par exemple cylindrique. Le premier piston d'équilibrage peut être formé par une partie de l'organe menant.

Au sens de la présente demande, « axialement » signifie « parallèlement à l'axe de rotation de l'organe menant », « radialement » signifie « perpendiculairement à l'axe de rotation de l'organe menant et le long d'un axe coupant cet axe de rotation » et « angulairement » signifie « autour de l'axe de rotation de l'organe menant ».

L'organe menant est par exemple solidarisé, directement ou via une ou plusieurs pièces intermédiaires, au moyeu d'entrée du double embrayage. Le moyeu d'entrée du double embrayage peut être relié à la sortie d'un dispositif d'amortissement, tel qu'un double volant amortisseur, dont l'entrée est reliée à un vilebrequin. En variante, le moyeu d'entrée du double embrayage est relié au vilebrequin sans interposition d'un dispositif d'amortissement.

L'organe menant transmet le couple en provenance du vilebrequin.

L'organe menant et le premier support de lamelles d'entrée peuvent comprendre des parties radiales et ces dernières peuvent être solidarisées entre elles, par exemple via un ou plusieurs rivets. Le cas échéant, la partie radiale de l'organe menant et la partie radiale du premier support de lamelles d'entrée peuvent être solidarisées à un plateau de réaction du premier embrayage. Les premières lamelles d'entrée se succèdent par exemple axialement le long du premier support de lamelles d'entrée entre deux lamelles d'extrémité, et l'une de ces lamelles d'extrémité est au contact du premier plateau de réaction tandis que l'autre lamelle d'extrémité est au contact d'un premier plateau de pression, formé par exemple par une portion du premier piston du premier embrayage. Ce premier piston peut traverser une ouverture ménagée dans l'organe menant.

Au sens de la présente demande, « axialement au-delà » signifie en ce qui concerne le premier embrayage « axialement au-delà lorsque l'on se déplace du premier plateau de réaction vers le premier plateau de pression ».

Chaque première lamelle d'entrée est solidaire en rotation du premier support de lamelles d'entrée et elle est axialement mobile par rapport à ce dernier. Entre deux premières lamelles d'entrée est disposée une première lamelle de sortie apte à être pincée par friction entre les deux premières lamelles d'entrée selon la position du premier piston.

Selon un premier exemple de mise en oeuvre de ce premier aspect de l'invention, le bouchon peut comprendre une portion s'étendant axialement dans le canal. Le bouchon peut comprendre également une portion disposée axialement au niveau du passage, chaque zone de ladite portion radialement en regard d'un passage étant disposée à distance de ce passage, de manière à permettre au liquide présent dans le canal de s'écouler dans le passage. Cette portion du bouchon peut être au contact, par exemple via son bord radialement intérieur, du bord radialement extérieur de la partie axiale de l'organe menant. En variante, un jeu de montage peut être ménagé entre lesdits bords. Une telle portion du bouchon peut permettre de réduire la section radiale du canal au niveau du bouchon tout en guidant le liquide vers le ou les passages ménagés à travers le premier support de lamelles d'entrée.

Le bord radialement extérieur de cette portion du bouchon peut définir une alternance de nervures et de rainures sur le pourtour dudit bouchon. Les nervures ménagées dans le bouchon peuvent être radialement superposées aux nervures du premier support de lamelles d'entrée et les rainures ménagées dans le bouchon peuvent être radialement superposées aux rainures du premier support de lamelles d'entrée. Le cas échéant, un jeu peut exister entre les nervures du bouchon et les nervures du premier support de lamelles d'entrée, de manière à faciliter l'introduction de ladite portion du bouchon dans le canal.

Selon ce premier exemple de mise en oeuvre de l'invention, le bouchon comprend une portion disposée axialement au-delà du passage, de manière à empêcher le liquide circulant dans le canal de s'écouler axialement au-delà de ce passage. Cette portion disposée axialement au-delà du passage peut comprendre un bord, notamment le bord radialement extérieur, en contact avec le bord radialement intérieur de la partie axiale du premier support de lamelles d'entrée. Cette même portion peut également présenter un bord, notamment le bord radialement intérieur, à distance du bord radialement extérieur de la partie axiale de l'organe menant. Cette distance avec le bord radialement extérieur de la partie axiale de l'organe menant permet de ménager un dégagement facilitant l'introduction de ladite portion du bouchon dans le canal.

Toujours selon ce premier exemple de mise en oeuvre du premier aspect de l'invention, le bouchon peut comprendre une portion s'étendant axialement au-delà de l'extrémité axiale de la partie axiale du premier support de lamelles d'entrée. Ladite portion peut comprendre un bord en contact avec ladite extrémité axiale de la partie axiale du premier support de lamelles d'entrée. En variante, cette portion peut ne pas être en contact avec l'extrémité axiale avec l'extrémité axiale du premier support de lamelles d'entrée. Cette portion du bouchon peut permettre de positionner axialement le bouchon dans le canal. Cette portion qui s'étend axialement au-delà de l'extrémité axiale de la partie axiale du premier support de lamelles d'entrée peut également s'étendre radialement au-delà de cette partie axiale du premier support de lamelles d'entrée, jusqu'à chevaucher radialement les premières lamelles d'entrée. Cette portion peut définir une lèvre d'étanchéité.

Selon ce premier exemple de mise en oeuvre de l'invention, lorsque plusieurs passages axialement décalés l'un par rapport à l'autre sont ménagés dans le premier support de lamelles d'entrée, le bouchon est disposé axialement au niveau du passage le plus éloigné de l'entrée en liquide dans le canal, cette entrée dans le canal permettant à du liquide présent dans une chambre d'équilibrage du premier piston de gagner ledit canal.

Selon un deuxième exemple de mise en oeuvre de ce premier aspect de l'invention, le bouchon est disposé axialement au-delà du passage, de manière à empêcher le liquide circulant dans le canal de s'écouler axialement au-delà de ce passage. Il n'y a alors aucune portion du bouchon qui soit axialement au même niveau qu'un passage ménagé dans le premier support de lamelles d'entrée.

Le bouchon peut être disposé axialement au-delà de l'extrémité axiale de la partie axiale du premier support de lamelles d'entrée et obturer l'espace entre cette extrémité et le bord radialement extérieur de l'organe menant. Autrement dit, selon ce deuxième exemple de mise en oeuvre du premier aspect de l'invention, le bouchon n'est pas radialement logé entre les parties axiales de l'organe menant et du premier support de lamelles d'entrée. Le bouchon vient alors fermer le canal en s'appliquant contre l'extrémité axiale de la partie axiale du premier support de lamelles d'entrée.

En variante, selon ce deuxième exemple de mise en oeuvre du premier aspect de l'invention, le bouchon peut comprendre :
- une portion disposée axialement au-delà de l'extrémité axiale de la partie axiale du premier support de lamelles d'entrée et obturant l'espace entre cette extrémité et le bord radialement extérieur de l'organe menant, et
- une portion disposée radialement en regard de l'extrémité axiale de la partie axiale du premier support de lamelles d'entrée, ladite portion s'étendant de façon discontinue autour de l'axe et coopérant avec des rainures ménagées dans le bord radialement intérieur dudit premier support de lamelles d'entrée.

Cette portion s'étendant de façon discontinue peut définir des picots coopérant avec des dents du premier support de lamelles d'entrée pour bloquer en rotation le bouchon par rapport au canal, réduisant encore le risque de fuites.

Selon le deuxième exemple de mise en oeuvre du premier aspect de l'invention, le bouchon peut comprendre une portion élastiquement déformable apte à s'appliquer contre une face de la première lamelle d'entrée d'extrémité qui est apte à être pressée par le premier plateau de pression. Cette portion élastiquement déformable peut permettre d'assurer une étanchéité entre les premières lamelles d'entrée et l'espace axial disposé au-delà de ladite première lamelle d'entrée d'extrémité, complétant ainsi l'étanchéité dans le canal et évitant à du liquide au contact des premières lamelles d'entrée de s'échapper.

Un ressort est par exemple disposé entre deux premières lamelles d'entrée consécutives, de manière à maintenir ces deux premières lamelles d'entrée dans une configuration au repos de l'embrayage, par exemple ouvert ou fermé. La raideur de la portion élastiquement déformable est avantageusement plus faible que celle du ressort, de manière à ne pas modifier le point de léchage de l'embrayage et à ne pas générer de couple résiduel.

Selon ce deuxième exemple de mise en oeuvre du premier aspect de l'invention, lorsque plusieurs passages axialement décalés l'un par rapport à l'autre sont ménagés dans le premier support de lamelles d'entrée, le bouchon est disposé axialement au-delà du passage le plus éloigné de l'entrée en liquide dans le canal, cette entrée permettant à du liquide présent dans une chambre d'équilibrage du premier piston de gagner ledit canal.

Dans tout ce qui précède, l'embrayage peut comprendre un premier support de lamelles de sortie et des premières lamelles de sortie, ces dernières étant portées par ce premier support de lamelles de sortie.

Dans tout ce qui précède, le bouchon peut être monobloc. Le bouchon peut être déformable Il peut être réalisé en élastomère, par exemple en Viton^{R}. Le bouchon peut encore être réalisé en matière(s) plastique(s), par exemple en PA46-GF15 ou en PA66-GF30.

En fonctionnement, le liquide s'écoule à travers des ouvertures ménagées dans un moyeu creux, ce dernier étant coaxial avec un premier arbre de sortie et avec un deuxième arbre de sortie, dans la chambre délimitée en partie par le premier piston. Le liquide quitte cette chambre par un passage ménagé entre la partie radiale du premier support de lamelles d'entrée et la partie radiale de l'organe menant, avant de gagner le canal puis, via les passages, de venir au contact des premières lamelles d'entrée. Selon un deuxième aspect, un deuxième embrayage pour double embrayage humide, comprend :
- une jupe mobile en rotation autour d'un axe et comprenant une partie axiale, ladite jupe étant apte à être solidarisée à un organe menant du double embrayage,
- un deuxième support de lamelles d'entrée, solidaire de la jupe et comprenant une partie axiale qui est radialement au-delà de la partie axiale de la jupe, de manière à ce que ces deux parties axiales définissent entre elles un canal apte à être parcouru par du liquide, notamment de l'huile,
- une pluralité de deuxièmes lamelles d'entrée portées par le deuxième support de lamelles d'entrée et aptes à venir au contact de deuxièmes lamelles de sortie portées par un deuxième support de lamelles de sortie solidaire d'un deuxième organe mené,
le deuxième support de lamelles d'entrée comprenant au moins un passage ménagé de manière à permettre au liquide contenu dans le canal de venir au contact des deuxièmes lamelles d'entrée, et un bouchon étant disposé de manière à former une extrémité de ce canal.

Le bouchon est une pièce distincte du deuxième support de lamelles d'entrée et de la jupe.

Selon ce deuxième aspect, le liquide, par exemple issu d'une chambre d'équilibrage délimitée axialement d'un côté par un deuxième piston dont le déplacement permet de mettre en contact les deuxièmes lamelles d'entrée avec les deuxièmes lamelles de sortie et d'un autre côté au moins en partie par un deuxième piston d'équilibrage, gagne le canal ménagé entre la partie axiale de la jupe et la partie axiale du deuxième support de lamelles d'entrée. La présence du bouchon dans le canal permet que le liquide circulant dans ce dernier vienne ensuite au contact des deuxièmes lamelles via le ou les passages ménagés dans le deuxième support de lamelles d'entrée, de manière à maintenir ces dernières à l'état humide et à refroidir le deuxième embrayage.

Le bouchon réduit ainsi, voire supprime, la quantité de liquide circulant dans le canal sans venir ensuite au contact des deuxièmes lamelles. Dans le cas optimal, le flux de fuite d'huile vers l'extérieur des lamelles est annulé.

Le canal peut s'étendre tout autour de l'axe de rotation de la jupe. Le canal est par exemple délimité radialement intérieurement et radialement extérieurement par deux surfaces globalement cylindriques, ce terme « globalement cylindrique » englobant une surface cylindrique dans laquelle est ménagée une alternance de rainures et de nervures formant des dents.

Le deuxième support de lamelles d'entrée peut comprendre une pluralité de passages se succédant sur un pourtour dudit support, ce pourtour présentant une alternance de nervures et de rainures. Entre vingt et cinquante nervures sont par exemple ménagées dans ce pourtour, par exemple quarante nervures. Autrement dit, des dents peuvent être ménagées par une partie au moins du deuxième support de lamelles d'entrée.

Le ou les passages peuvent être ménagés dans les nervures et être axialement entre deux deuxièmes lamelles d'entrée. On favorise ainsi l'écoulement du liquide au contact des lamelles et donc le maintien de celles-ci à l'état humide et le refroidissement du deuxième embrayage. Chaque nervure définit par exemple un passage. Le cas échéant, la position axiale des passages peut différer entre deux passages consécutifs angulairement parlant, cette position axiale restant cependant toujours à hauteur d'un espace entre deux deuxièmes lamelles d'entrée. Le cas échéant, un passage est ménagé en regard de chaque espace entre deux deuxièmes lamelles d'entrée. Le bouchon est alors disposé axialement au-delà du passage le plus éloigné axialement de l'entrée du canal.

La jupe est par exemple un deuxième piston d'équilibrage, solidaire de l'organe menant. Comme déjà mentionné, l'organe menant est par exemple solidarisé, directement ou via une ou plusieurs pièces intermédiaires, au moyeu d'entrée du double embrayage.

La jupe et le deuxième support de lamelles d'entrée peuvent comprendre des parties radiales et ces dernières peuvent être solidarisées entre elles, par exemple via un ou plusieurs rivets. Le cas échéant, la partie radiale de la jupe et la partie radiale du deuxième support de lamelles d'entrée peuvent être solidarisées à un plateau de réaction du deuxième embrayage.

Le ou les rivets peuvent également solidariser la jupe et l'organe menant du double embrayage.

Les deuxièmes lamelles d'entrée se succèdent par exemple axialement le long du deuxième support de lamelles d'entrée entre deux lamelles d'extrémité, et l'une de ces lamelles d'extrémité est au contact du deuxième plateau de réaction du deuxième embrayage tandis que l'autre lamelle d'extrémité est au contact du deuxième plateau de pression du deuxième embrayage, ce plateau de pression étant formé par exemple par une portion du deuxième piston du deuxième embrayage. « Axialement au-delà » signifie alors « axialement au-delà lorsque l'on se déplace du deuxième plateau de réaction vers le deuxième plateau de pression ».

Chaque deuxième lamelle d'entrée est solidaire en rotation du deuxième support de lamelles d'entrée et elle est axialement mobile par rapport à ce dernier. Entre deux deuxièmes lamelles d'entrée est disposée une deuxième lamelle de sortie apte à être pincée par friction entre les deux deuxièmes lamelles d'entrée, selon la position du deuxième piston.

Selon un premier exemple de mise en oeuvre de ce deuxième aspect, le bouchon peut comprendre une portion s'étendant axialement dans le canal. Le bouchon peut comprendre également une portion disposée axialement au niveau du passage, chaque zone de ladite portion qui est radialement en regard d'un passage étant disposée à distance de ce passage, de manière à permettre au liquide de s'écouler dans le passage. Cette portion du bouchon peut être au contact, par exemple via son bord radialement intérieur, du bord radialement extérieur de la partie axiale de la jupe. En variante, un jeu de montage peut être ménagé entre lesdits bords. Une telle portion peut permettre de réduire la section radiale du canal au niveau du bouchon, tout en guidant le liquide vers le ou les passages mentionnés à travers le deuxième support de lamelles d'entrée.

Le bord radialement extérieur de cette portion du bouchon peut définir une alternance de nervures et de rainures sur le pourtour dudit bouchon. Les nervures ménagées dans le bouchon peuvent être radialement superposées aux nervures du deuxième support de lamelles d'entrée et les rainures ménagées dans le bouchon peuvent être radialement superposées aux rainures du deuxième support de lamelles d'entrée. Le cas échéant, un jeu peut exister entre les nervures du bouchon et les nervures du deuxième support de lamelles d'entrée, de manière à faciliter l'introduction de ladite portion du bouchon dans le canal.

Toujours selon ce premier exemple de mise en oeuvre de ce deuxième aspect, le bouchon peut comprendre une portion disposée axialement au-delà du passage, de manière à empêcher le liquide circulant dans le canal de s'écouler axialement au-delà de ce passage. Cette portion peut comprendre au moins une lèvre d'étanchéité venant s'appliquer contre le bord radialement intérieur de la partie axiale du deuxième support de lamelles d'entrée. Cette lèvre d'étanchéité accroît encore l'étanchéité fournie par le bouchon, garantissant le fait que tout le liquide circulant dans le canal traverse le ou les passages pour venir au contact des deuxièmes lamelles, de sorte que ces dernières sont maintenues humides et refroidissent le deuxième embrayage. La lèvre d'étanchéité peut être déformable et compenser un jeu de montage. La forme de la lèvre d'étanchéité peut également faciliter le montage du bouchon dans le canal.

La lèvre d'étanchéité peut présenter une extrémité libre reçue dans un logement ménagé dans le bord radialement intérieur du deuxième support de lamelles d'entrée. La lèvre d'étanchéité peut être montée par un serrage sans jeu dans ce logement ménagé dans le bord radialement intérieur du deuxième support de lamelles d'entrée.

La lèvre d'étanchéité peut définir angulairement une alternance de nervures et de rainures. Ces nervures et ces rainures peuvent être alignées axialement avec celles définies par la portion du bouchon qui est axialement au niveau du passage, ces nervures, respectivement ces rainures, étant alors dans le prolongement axial les unes des autres.

Le cas échéant, plusieurs lèvres d'étanchéité identiques, par exemple deux lèvres d'étanchéité identiques, peuvent se succéder axialement.

Toujours selon ce premier exemple de mise en oeuvre du deuxième aspect, le bouchon peut comprendre une portion disposée axialement au-delà de l'extrémité axiale de la partie axiale du deuxième support de lamelles d'entrée. Cette portion peut comprendre un bord venant en contact avec ladite extrémité axiale. En variante, cette portion peut ne pas venir au contact de l'extrémité axiale de la partie axiale du deuxième support de lamelles d'entrée. Cette portion disposée axialement au-delà du deuxième support de lamelles d'entrée peut permettre d'assurer un bon positionnement axial du bouchon par rapport au canal.

Le cas échéant un moyen d'étanchéité déformable élastiquement peut être prévu pour s'appliquer contre la face extérieure de la deuxième lamelle d'extrémité en contact avec le deuxième plateau de pression. Ce moyen d'étanchéité présente de préférence une raideur inférieure à celle d'un ressort disposé entre deux deuxièmes lamelles d'entrée consécutives, afin de ne pas modifier le point de léchage du deuxième embrayage, comme déjà décrit en rapport avec le premier embrayage. Ce moyen d'étanchéité empêche ainsi le liquide venant au contact des deuxièmes lamelles de s'échapper au niveau de ladite deuxième lamelle d'extrémité. Le cas échéant, ce moyen d'étanchéité est distinct du bouchon. En variante, le moyen d'étanchéité peut être solidaire du bouchon, formant notamment une portion de ce dernier, notamment la portion s'étendant axialement au-delà du deuxième support de lamelles d'entrée.

Selon ce premier exemple de mise en oeuvre de ce deuxième aspect, lorsque plusieurs passages axialement décalés l'un par rapport à l'autre sont ménagés dans le deuxième support de lamelles d'entrée, le bouchon est disposé au moins en partie axialement au-delà du passage le plus éloigné de l'entrée en liquide dans le canal, cette entrée permettant à du liquide présent dans une chambre d'équilibrage du deuxième piston de gagner ledit canal.

Selon un deuxième exemple de mise en oeuvre de ce deuxième aspect, le bouchon peut être disposé axialement au-delà du passage, de manière à empêcher le liquide circulant dans le canal de s'écouler axialement au-delà de ce passage.

Le bouchon peut alors comprendre une portion s'étendant axialement en deçà de l'extrémité axiale de la partie axiale du deuxième support de lamelles d'entrée, cette portion s'étendant tout autour de l'axe. Autrement dit, cette portion est axialement strictement comprise entre le passage et l'extrémité axiale de la partie axiale du deuxième support de lamelle d'entrée. Cette portion a par exemple une forme annulaire.

Cette portion du bouchon peut présenter un bord radialement extérieur en contact linéique avec le bord radialement intérieur de la partie axiale du deuxième support de lamelles d'entrée. Ce contact linéique permet de garantir l'étanchéité entre le bouchon et le bord radialement intérieur de la partie axiale du deuxième support de lamelles d'entrée.

Toujours selon ce deuxième exemple de mise en oeuvre de ce deuxième aspect, le bouchon peut comprendre une portion s'étendant axialement au-delà de l'extrémité axiale de la partie axiale du deuxième support de lamelles d'entrée, cette portion s'étendant de façon discontinue autour de l'axe.

Cette portion s'étendant axialement au-delà de l'extrémité axiale de la partie axiale du deuxième support de lamelles d'entrée peut avoir une extrémité axiale disposée axialement au-delà de l'extrémité axiale de la jupe. Cette extrémité axiale peut être recourbée, définissant ainsi un système d'accrochage du bouchon sur la jupe. Un maintien en position du bouchon peut ainsi être garanti.

Selon ce deuxième exemple de mise en oeuvre du deuxième aspect, lorsque plusieurs passages axialement décalés l'un par rapport à l'autre sont ménagés dans le deuxième support de lamelles d'entrée, le bouchon est disposé axialement au-delà du passage le plus éloigné de l'entrée en liquide dans le canal, cette entrée permettant à du liquide présent dans une chambre d'équilibrage du deuxième piston de gagner ledit canal.

Dans tout ce qui précède, le deuxième embrayage peut comprendre un deuxième support de lamelles de sortie et des deuxièmes lamelles de sortie, ces dernières étant portées par ce deuxième support de lamelles de sortie.

Dans tout ce qui précède, le bouchon peut être monobloc. Le bouchon peut être déformable. Il peut être réalisé en élastomère, par exemple en Viton^{R}. Le bouchon peut encore être réalisé en matière(s) plastique(s), par exemple en PA46-GF15 ou en PA66-GF30.

En fonctionnement, le liquide s'écoule à travers des ouvertures ménagées dans un moyeu creux, étant coaxial avec un premier arbre de sortie et avec un deuxième arbre de sortie, dans la chambre délimitée en partie par le deuxième piston. Le liquide quitte cette chambre par un passage ménagé entre la partie radiale du deuxième support de lamelles d'entrée et la partie radiale de la jupe avant de gagner le canal puis de venir au contact des deuxièmes lamelles via les passages ménagés dans le deuxième support de lamelles d'entrée.

Les premières lamelles, respectivement deuxièmes lamelles, peuvent être assemblées avant solidarisation, notamment rivetage, du premier, respectivement deuxième, support de lamelles d'entrée et de l'organe menant, respectivement la jupe. En variante, la forme du bouchon peut permettre un assemblage des premières lamelles, respectivement des deuxièmes lamelles, après solidarisation, notamment rivetage, du premier support de lamelles d'entrée avec l'organe menant, respectivement du deuxième support de lamelles d'entrée avec la jupe.

Selon un troisième aspect, un double embrayage humide comprend :
- un premier embrayage tel que défini ci-dessus, et
- un deuxième embrayage tel que défini ci-dessus.

Chacun de ces embrayages est alors muni d'un bouchon tel que défini ci-dessus.

Les deux embrayages peuvent être disposés axialement dans le prolongement l'un de l'autre.

Lorsque l'on se déplace axialement le long du double embrayage, on peut ainsi trouver successivement le premier plateau de pression, les premières lamelles d'entrée et de sortie, le premier plateau de réaction, le deuxième plateau de réaction, les deuxièmes lamelles d'entrée et de sortie, et le deuxième plateau de pression.

Le premier plateau de réaction peut être distinct du deuxième plateau de réaction, l'un pouvant par exemple fléchir en direction ou en éloignement de l'autre.

Un même organe de liaison, par exemple un rivet, peut solidariser entre eux dans cet ordre axial : l'organe menant, le premier support de lamelles d'entrée, le premier plateau de réaction, le deuxième plateau de réaction, le deuxième support de lamelles d'entrée et la jupe. Selon un quatrième aspect, un embrayage humide, comprend :
- un support de lamelles d'entrée, apte à être entraîné en rotation autour d'un axe par un organe menant, et
- une pluralité de lamelles d'entrée portées par le support de lamelles d'entrée et aptes à venir au contact de lamelles de sortie portées par un support de lamelles de sortie solidaire d'un organe mené, lesdites lamelles d'entrée comprenant : une lamelle d'extrémité apte à venir au contact d'un plateau de pression de l'embrayage, une lamelle d'extrémité apte à venir au contact d'un plateau de réaction de l'embrayage, et des lamelles intermédiaires interposées axialement entre lesdites lamelles d'extrémité, du liquide pouvant se déplacer d'une lamelle d'extrémité à l'autre grâce à des ouvertures ménagées dans les lamelles intermédiaires, tout en restant confiné dans l'espace axial délimité par lesdites lamelles d'extrémité.

Ce quatrième aspect permet de maintenir le liquide au contact des lamelles d'entrée et de sortie en empêchant les fuites via les lamelles d'extrémité, tout en garantissant une circulation du liquide au sein de cet espace, et ainsi une répartition homogène du liquide.

Chaque lamelle peut s'étendre tout autour de l'axe et présenter un bord radialement intérieur présentant une alternance de rainures et de nervures. Des nervures, notamment toutes les nervures, d'au moins certaines lamelles intermédiaires peuvent être munies de cavités, étant par exemple des découpes, définissant lesdites ouvertures. On garantit ainsi la circulation du liquide mentionnée ci-dessus.

Les nervures des lamelles d'extrémité peuvent être dépourvues de cavité, de sorte qu'un passage du liquide au travers de ces dernières n'est pas possible.

L'embrayage selon le quatrième aspect peut être celui selon le première aspect de l'invention, ou celui selon le deuxième aspect. En variante, le premier embrayage et le deuxième embrayage du double embrayage humide selon le troisième aspect peuvent chacun être également comme selon le quatrième aspect. L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un double embrayage humide au sein duquel peut être mise en oeuvre l'invention,
- la figure 2 représente un détail du double embrayage de la figure 1,
- les figures 3 à 16 se rapportent au premier embrayage du double embrayage de la figure 1,
- les figures 17 à 29 se rapportent au deuxième embrayage du double embrayage de la figure 1,
- les figures 30 à 33 représentent en partie un premier et un deuxième embrayage d'un double embrayage humide.

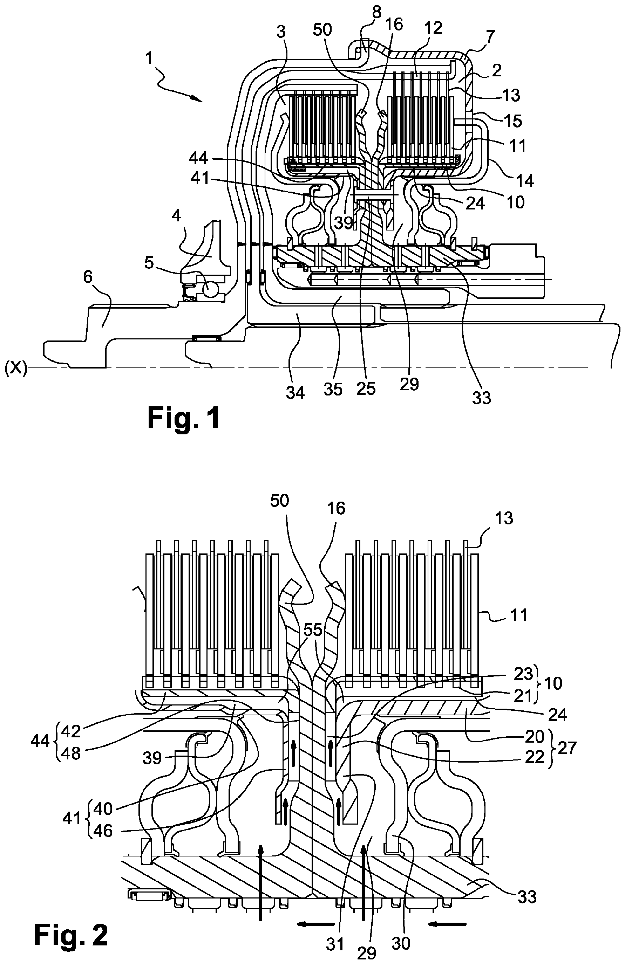

On a représenté sur la figure 1 un double embrayage humide 1 de véhicule automobile ou de poids lourd, comprenant un bouchon selon des exemples de mise en oeuvre de l'invention.

Ce double embrayage humide 1 comprend un axe de rotation X et deux embrayages 2 et 3 qui se succèdent axialement.

Les deux embrayages 2 et 3 sont reçus dans un boîtier commun 4 monté via un palier 5 sur un moyeu d'entrée 6 du double embrayage, ce moyeu d'entrée 6 étant entraîné en rotation autour de l'axe X par le vilebrequin non représenté du véhicule.

Le moyeu d'entrée 6 est relié, via une liaison 8, à un flasque 7 définissant un organe menant pour le double embrayage 1. L'organe menant 7 entoure en partie le premier embrayage 2. Ce dernier comprend un premier support de lamelles d'entrée 10 portant des premières lamelles d'entrée 11 et un premier support de lamelles de sortie 12 portant des premières lamelles de sortie 13.

Le premier embrayage 2 comprend encore un premier plateau de pression 14 passant à travers une ouverture 15 ménagée dans l'organe menant 7, et un premier plateau de réaction 16, les premières lamelles d'entrée 11 étant axialement entourées par le premier plateau de pression 14 d'une part, et par le premier plateau de réaction 16 d'autre part, ces derniers venant respectivement en contact avec une première lamelle d'entrée 11 d'extrémité.

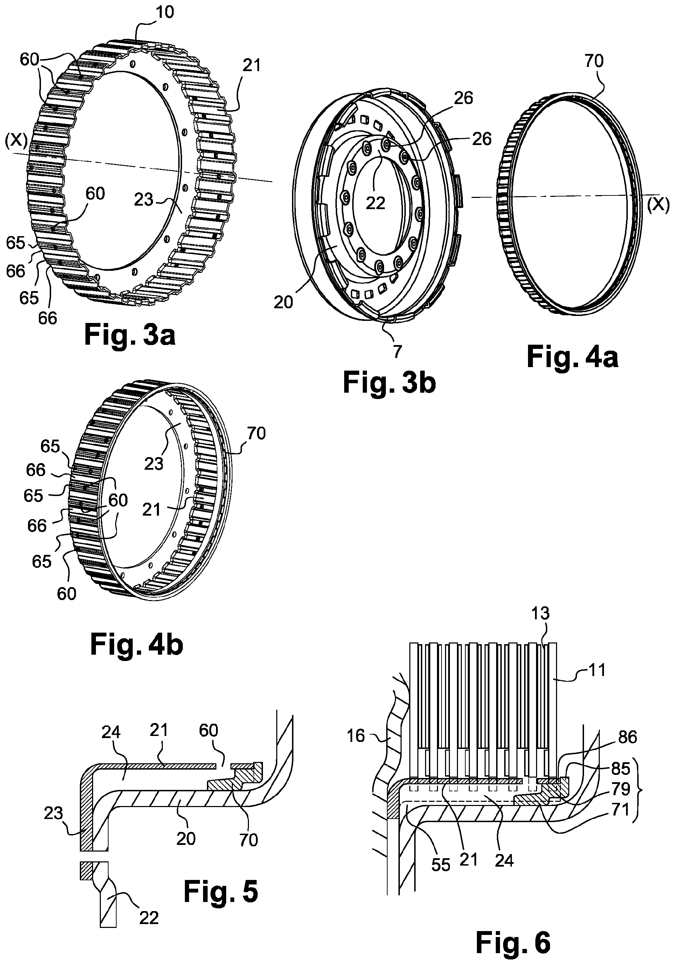

Comme représenté sur les figures 2, 3a et 3b qui montrent respectivement :
- un détail du double embrayage humide de la figure 1, sur lequel le trajet de l'huile est représenté par des flèches,
- le premier support de lamelles 10 du double embrayage humide de la figure 1 qui est ici représenté isolé, et
- l'organe menant 7 du double embrayage humide de la figure 1 qui est ici représenté isolé, l'organe menant 7 et le premier support de lamelles d'entrée 10 comprennent des parties axiales respectivement désignées par 20 et 21 qui définissent entre elles un canal 24.

L'organe menant 7 et le premier support de lamelles d'entrée 10 comprennent encore des parties radiales respectivement désignées par 22 et 23 qui sont solidarisées au premier plateau de réaction 16 via un même rivet 25.

Dans l'exemple considéré, un passage radial est ménagé entre les parties 22 et 23. Le passage est ici formé grâce à des reliefs 26 disjoints deux à deux et ménagés sur la partie radiale 22. Dans l'exemple de la figure 3b, ces reliefs 26 sont des bossages et le passage radial est ménagé par le vide entre deux bossages 26 consécutifs angulairement. Ce passage radial permet à de l'huile présente dans une chambre d'équilibrage 29 délimitée d'un côté par un premier piston 30 et d'un autre côté par une partie de l'organe menant 7 qui définit alors un premier piston d'équilibrage 31, de gagner le canal 24. Le déplacement du premier piston 30 permet de modifier l'état du premier embrayage 2, en créant sélectivement un contact par friction entre les premières lamelles d'entrée 11 et les premières lamelles de sortie 13. La chambre 29 est alimentée en liquide depuis un moyeu creux 33, coaxial avec un premier moyeu de sortie 34 et un deuxième moyeu de sortie 35, ce dernier étant creux et recevant intérieurement le premier moyeu de sortie 34.

Le premier moyeu de sortie 34 est solidaire du premier support de lamelles de sortie 12 et définit ainsi un premier organe mené.

Le deuxième embrayage 3 a une structure proche de celle du premier embrayage 2, en différant essentiellement en ce que le canal 39 est ménagé entre la partie axiale 40 d'une jupe axiale 41 formant un deuxième piston d'équilibrage, et la partie axiale 42 du deuxième support de lamelles d'entrée 44.

Comme on peut le voir sur la figure 1, le rivet 25 peut permettre de solidariser les pièces suivantes disposées axialement dans cet ordre : la partie radiale 46 de la jupe axiale 41, la partie radiale 48 du deuxième support de lamelles d'entrée 44, le deuxième plateau de réaction 50, le premier plateau de réaction 16, la partie radiale 23 du premier support de lamelles d'entrée 10 et la partie radiale 22 de l'organe menant 7.

Le canal 24 du premier embrayage 2 et le canal 39 du deuxième embrayage 3 s'étendent dans l'exemple décrit depuis une entrée 55 ménagée à proximité du plateau de réaction 16 ou 50 de cet embrayage 2 ou 3.

Comme on peut le voir sur la figure 3a, le premier support de lamelles d'entrée 10 présente une pluralité de passages 60 ménagés à travers ce dernier et permettant au liquide présent dans le canal 24 de venir au contact des lamelles du premier embrayage 2. Dans l'exemple considéré, le premier support de lamelles 10 définit, lorsque l'on se déplace autour de l'axe X, une pluralité de nervures 65 alternant avec des rainures 66 de manière à former des dents radiales. Dans l'exemple considéré, un passage 60 est ménagé dans chaque nervure 65. Comme on peut le voir sur la figure 2, le passage 60 peut ne pas être ménagé à une même hauteur axiale d'une nervure 65 à la nervure 65 adjacente, angulairement parlant. Sur une série de nervures 65 consécutives, le passage 60 peut se déplacer axialement d'une première lamelle d'entrée d'extrémité vers l'autre, ce même déplacement axial du passage recommençant pour la série de nervures suivantes.

Le deuxième support de lamelles d'entrée 44 peut présenter également une alternance de nervures et de rainures, des passages radiaux, éventuellement décalés axialement d'une nervure à l'autre, étant ménagés dans ces nervures.

Ces passages 60 ou 67 peuvent être disposés dans ledit support de lamelles d'entrée à des positions axiales différentes et à des positions angulaires différentes, d'un passage au passage immédiatement suivant.

L'emprunt par le liquide circulant dans le canal 24 du premier embrayage 2 des passages 60 est favorisé par l'existence pour ce premier embrayage 2 d'un bouchon 70 formant une extrémité du canal 24.

Un tel bouchon 70 va maintenant être décrit en référence aux figures 4 à 16.

Les figures 4 à 10 permettent de décrire un premier exemple de mise en oeuvre de bouchon 70 pour le premier embrayage 2.

La figure 4a représente le bouchon 70 en isolé et la figure 4b représente le bouchon 70 en position sur le premier support de lamelles d'entrée 10.

Comme représenté sur la figure 4a, le bouchon 70 présente ici une forme sensiblement annulaire, étant creux et s'étendant tout autour de l'axe X. Le bouchon 70 est destiné à être positionné en grande partie radialement entre les parties axiales 20 et 21 de l'organe menant 7 et du premier support de lamelles d'entrée 10. Comme représenté sur la figure 4b, le bouchon 70 présente une dimension axiale l1 inférieure à celle l2 de la partie axiale 21 du premier support de lamelles d'entrée 10,11 étant par exemple comprise entre 10% et 30%, notamment égale à 15 ou 20% de 12. Le bouchon 70 est par exemple réalisé en une matière élastiquement déformable, par exemple en un élastomère, ce dernier étant notamment du Viton^{R}. En variante, le bouchon 70 est réalisé en une matière plastique, par exemple en PA46-GF15 ou en PA66-GF30.

Les figures 5 à 7 montrent respectivement :
- la façon dont sont disposés l'un par rapport à l'autre l'organe menant 7 et le premier support de lamelles d'entrée 10,
- le canal 24, et
- la partie du canal 24 coopérant avec le bouchon 70.

Le bouchon 70 présente une portion 71 disposée axialement au niveau du passage 60 le plus proche du premier plateau de pression 14. Ce positionnement du bouchon 70 axialement au-delà des autres passages 60 ménagés dans le premier support de lamelles d'entrée 10 garantit un libre écoulement de liquide à travers ces derniers depuis le canal 24. Cette portion 71 du bouchon 70 est ici au contact via son bord radialement intérieur 72 du bord radialement extérieur 73 de la partie axiale 20 de l'organe menant 7. Via son bord radialement extérieur 74, cette portion 70 est à distance du bord radialement intérieur 75 du premier support de lamelles d'entrée 10 au niveau du passage 60, de sorte que l'écoulement du liquide à travers ce passage 60 est permis.

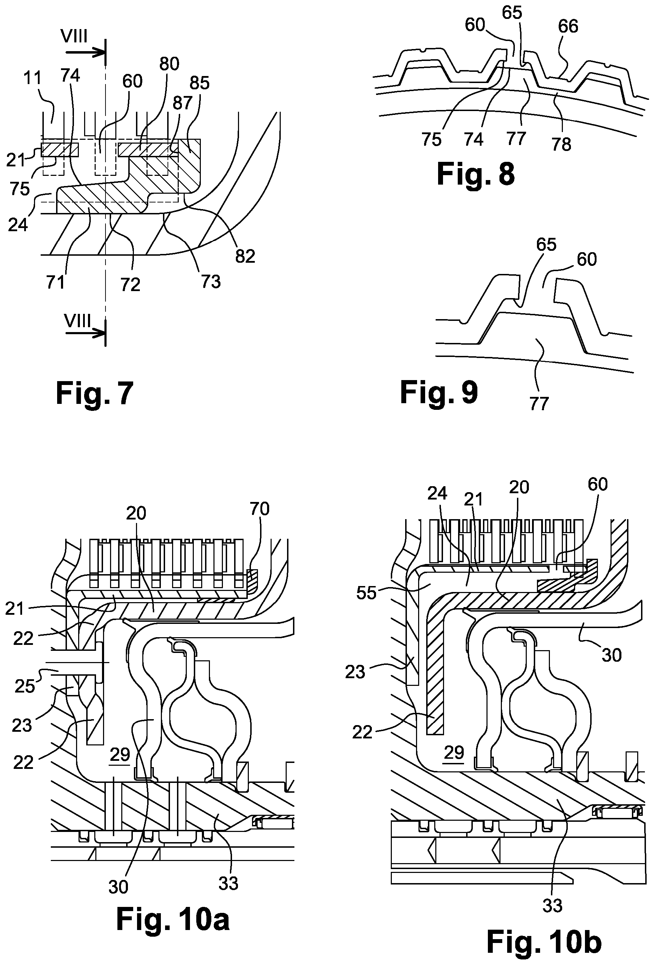

Comme représenté sur la figure 8, qui est une vue en coupe selon VIII-VIII de la figure 7, le bord radialement extérieur 74 de cette portion 71 du bouchon 70 définit une alternance de nervures 77 et de rainures 78 sur le pourtour dudit bouchon. Les nervures 77 ménagées dans le bouchon 70 sont ici radialement superposées aux nervures 65 du premier support de lamelles d'entrée 10, et les rainures 78 ménagées dans le bouchon 70 sont radialement superposées aux rainures 66 du premier support de lamelles d'entrée 10.

Comme représenté sur la figure 9 qui montre en détail une nervure 77 et une nervure 65 de la figure 8, un jeu peut exister entre les nervures 77 du bouchon 70 et les nervures 65 du premier support de lamelles d'entrée 10, de manière à faciliter l'introduction de la portion 71 du bouchon dans le canal 24 et le passage du liquide dans le passage 60.

Comme représenté sur les figures 5 à 7, le bouchon 70 peut comprendre une portion 79 disposée axialement au-delà du passage 60, de manière à empêcher le liquide circulant dans le canal 24 de s'écouler axialement au-delà de ce passage 60. Par rapport à la portion 71 précédemment décrite, cette portion 79 est plus proche du premier plateau de pression 14. La portion 79 comprend un bord radialement extérieur 80 en contact avec le bord radialement intérieur 75 de la partie axiale 21 du premier support de lamelles d'entrée 10. Cette même portion 79 du bouchon 70 présente également dans l'exemple considéré un bord radialement intérieur 82 à distance du bord radialement extérieur 73 de la partie axiale 20 de l'organe menant 7, de manière à ménager avec ce dernier un dégagement facilitant le montage du bouchon 70.

Selon cet exemple, le bouchon 70 peut encore comprendre une portion 85 s'étendant axialement au-delà de l'extrémité axiale 86 du premier support de lamelles d'entrée 10, ladite portion 85 comprenant un bord 87 en contact avec ladite extrémité axiale 86 du premier support de lamelles d'entrée 10. Comme on peut le voir sur la figure 6, la portion 85 peut s'étendre radialement au-delà de la partie axiale 21 du premier support de lamelles d'entrée 10, venant par exemple radialement au niveau d'une partie des premières lamelles d'entrée 11.

Les figures 10a et 10b représentent en partie le premier embrayage 2 muni du bouchon 70 qui vient d'être décrit, respectivement dans un plan coupant une rainure 66 du premier support de lamelles d'entrée 10 et dans un plan coupant une nervure 65 de ce premier support de lamelles d'entrée 10.

Comme représenté sur ces figures 10a et 10b, selon l'exemple qui vient d'être décrit, l'huile gagne depuis le moyeu creux 33 la chambre d'équilibrage 29 délimitée en partie par le premier piston 30 dont le déplacement permet de modifier l'état du premier embrayage 2. Le liquide circule ensuite entre la partie radiale 22 de l'organe menant 7 et la partie radiale 23 du premier support de lamelles d'entrée 10, puis gagne l'entrée 55 du canal 24, circulant alors axialement entre les parties 20 et 21 de l'organe menant 7 et du premier support de lamelles d'entrée 10. Le long de ce canal 24, du liquide gagne l'espace occupé par les premières lamelles 11 et 13, à travers les passages successifs 60 non représentés qu'il rencontre. Cet écoulement dans le canal 24 est interrompu par le bouchon 70 qui forme ainsi une extrémité du canal 24.

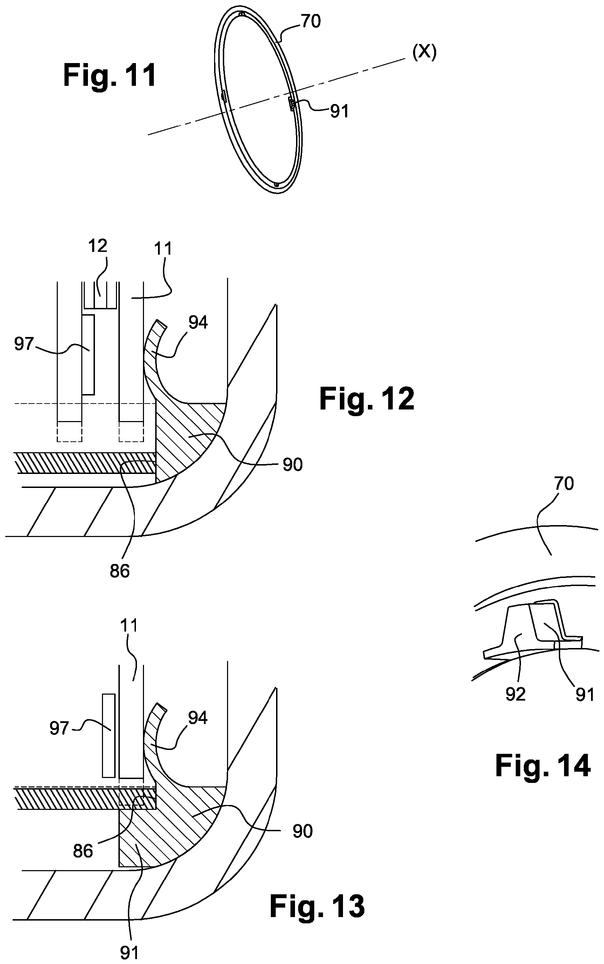

Les figures 11 à 16 permettent de décrire un deuxième exemple de mise en oeuvre de bouchon 70 pour le premier embrayage 2.

Le bouchon 70 s'étend tout autour de l'axe X, présentant une forme annulaire, comme on peut le voir sur la figure 11.

Selon ce deuxième exemple de mise en oeuvre, le bouchon 70 est disposé exclusivement axialement au-delà du passage 60 le plus éloigné du premier plateau de réaction 16, le bouchon 70 n'étant alors jamais axialement au même niveau que ce passage 60.

Comme représenté sur les figures 12 et 13, le bouchon 70 selon ce deuxième exemple de mise en oeuvre, comprend :
- une portion 90 disposée axialement au-delà de l'extrémité axiale 86 de la partie axiale 21 du premier support de lamelles d'entrée 10, et obturant l'espace entre cette extrémité 86 et le bord radialement extérieur 73 de la partie axiale 20 de l'organe menant 7, et
- une portion 91 disposée axialement au niveau de l'extrémité axiale 86 de la partie axiale 21 du premier support de lamelles d'entrée 10.

La figure 12 est une vue en coupe au niveau d'une rainure 66 du premier support de lamelles d'entrée 10 tandis que la figure 13 est une vue au coupe au niveau d'une nervure 65 de ce premier support de lamelles d'entrée 10.

Comme on peut le voir sur la figure 14, qui est une vue selon une direction axiale d'une partie du bouchon 70 selon le deuxième exemple de mise en oeuvre, la portion 91 du bouchon 70 peut s'étendre de façon discontinue autour de l'axe X. Cette portion 91 coopère avec des rainures 65 ménagées dans le premier support de lamelles d'entrée 10 afin de réaliser une indexation angulaire du bouchon 70 par rapport audit premier support 10 ainsi qu'afin d'assurer une certaine rigidité du bouchon 70 en cas de compression.

La portion 91 définit par exemple des picots 92.

Selon l'une ou l'autre des variantes mentionnées en référence au deuxième exemple de mise en oeuvre du bouchon pour le premier embrayage 2, ce bouchon 70 peut comprendre une portion élastiquement déformable 94 apte à s'appliquer contre une face de la première lamelle d'entrée d'extrémité 11 apte à être pressée par le premier plateau de pression 14. Cette portion élastiquement déformable 94 permet d'assurer une étanchéité entre les premières lamelles d'entrée 11 et l'espace axial disposé au-delà de ladite première lamelle d'entrée d'extrémité en direction de l'extérieur du premier embrayage 2. La raideur de cette portion élastiquement déformable 94 est avantageusement moindre que celle d'un ressort 97 interposé entre deux premières lamelles d'entrée 11 consécutives et maintenant ces dernières dans une position par défaut qui est ici une position dans laquelle le premier embrayage 2 est ouvert.

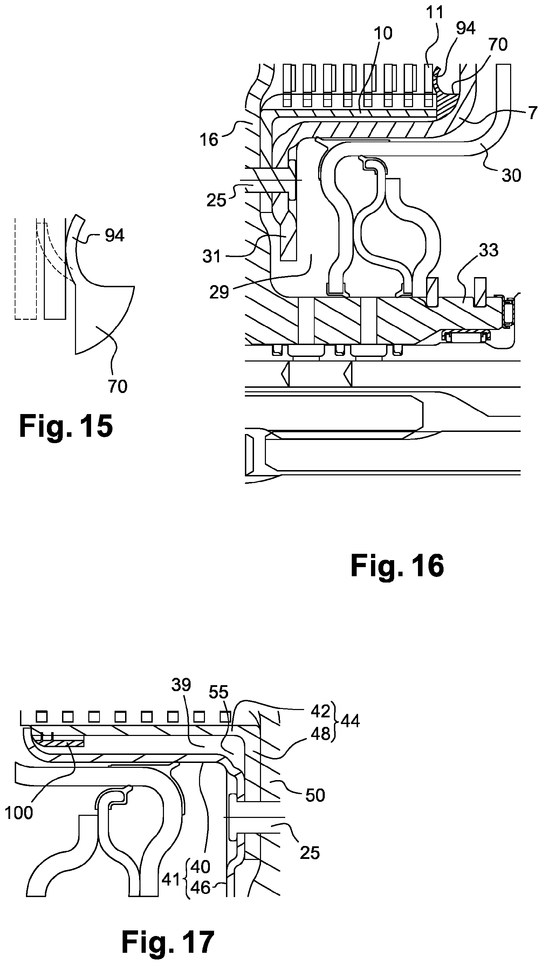

La figure 15 représente en trait plein la position de la portion élastiquement déformable 94 contre la première lamelle d'entrée d'extrémité 11 lorsque le premier piston 30 n'est pas activé pour modifier l'état du premier embrayage 2, et en pointillés la position de cette portion 94 lorsque le premier piston 30 est activé.

Comme on peut le voir sur les figures 11 à 16, la portion élastiquement déformable 94 peut être réalisée d'une seule pièce avec le reste du bouchon 70.

La figure 16 représente de façon similaire aux figures 10a et 10b le circuit emprunté par le liquide depuis le moyeu creux 33 jusqu'à sa venue en contact avec les premières lamelles 11 et 13, lorsque le premier embrayage comprend un bouchon 70 selon le deuxième exemple de mise en oeuvre.

Concernant le deuxième embrayage 3, l'emprunt par le liquide circulant dans le canal 39 des passages 67 est favorisé par l'existence pour ce deuxième embrayage 3 d'un bouchon 100 formant une extrémité du canal 39. Ce canal est représenté sur la figure 17 avec le bouchon 100.

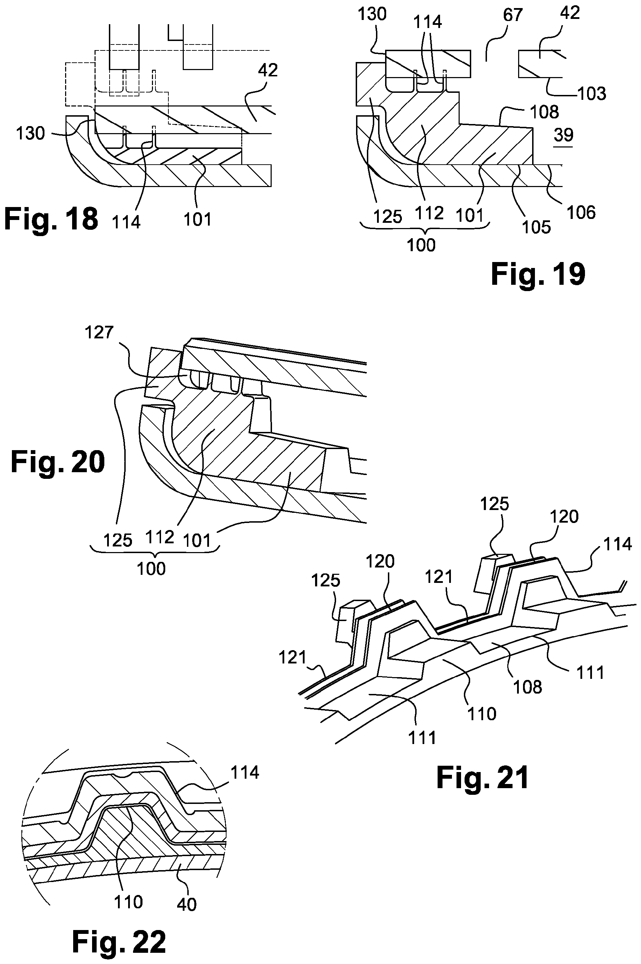

Le bouchon 100 va maintenant être décrit en référence aux figures 18 à 29.

Selon un premier exemple de mise en oeuvre d'un tel bouchon 100, ce dernier comprend une portion 101 disposée axialement au niveau du passage 67 le plus éloigné du deuxième plateau de réaction 50. Chaque zone de ladite portion 101 radialement et axialement en regard d'un passage 67 est ici disposée à distance du bord radialement intérieur 103 de la partie axiale 42 du deuxième support de lamelles d'entrée 44, de manière à permettre la circulation du liquide présent dans le canal 39 à travers ce passage 67.

Cette portion du bouchon 101 est au contact, via son bord radialement intérieur 105, du bord radialement extérieur 106 de la partie axiale 40 de la jupe 41. La forme de cette portion 101 du bouchon 100 permet de guider le liquide vers les passages 67 ménagés à travers le deuxième support de lamelles d'entrée 44. Comme on peut le voir en comparant la figure 18, qui est une vue en coupe au niveau d'une rainure du deuxième support de lamelles d'entrée 44, et la figure 19, qui est une vue en coupe au niveau d'une nervure du deuxième support de lamelles d'entrée 44, le bord radialement extérieur 108 de cette portion 101 peut définir une alternance de nervures 110 et de rainures 111 sur le pourtour dudit bouchon 100. Ces nervures 110 et ces rainures 111 sont visibles sur les figures 21 et 22.

Ces nervures 110 sont dans l'exemple considéré radialement superposées aux nervures ménagées dans le deuxième support de lamelles d'entrée 44, et les rainures 111 ménagées dans le bouchon sont également radialement superposées aux rainures du deuxième support de lamelles d'entrée 44. Le cas échéant, un jeu peut exister entre les nervures du bouchon 100 et les nervures du deuxième support de lamelles d'entrée 44, de manière à faciliter l'introduction de ladite portion 101 du bouchon 100 dans le canal 39 et de manière à favoriser le passage d'huile par le passage 67.

Toujours selon ce premier exemple de mise en oeuvre du bouchon 100, le bouchon 100 comprend une portion 112 disposée axialement au-delà du passage 67, de manière à empêcher le liquide circulant dans le canal 39 de s'écouler axialement au-delà de ce passage 67. Cette portion 112 peut comprendre au moins une lèvre d'étanchéité 114 venant s'appliquer contre le bord radialement intérieur 103 de la partie axiale 42 du deuxième support de lamelles d'entrée 44. La lèvre d'étanchéité 114 est ici déformable et elle présente une extrémité libre 115 reçue dans un logement ménagé dans le bord radialement intérieur 103 du deuxième support de lamelles d'entrée 44. La lèvre d'étanchéité 114 peut se déformer tout autour de l'axe X.

Similairement à ce qui a été exposé en référence au bord radialement extérieur 108 de la portion 101 du bouchon 100, la lèvre d'étanchéité 114 peut définir angulairement une alternance de nervures 120 et de rainures 121. Ces nervures 120 et ces rainures 121 sont ici respectivement alignées axialement avec les nervures 110 et les rainures 111 définies par la portion 101 du bouchon 100. Dans l'exemple considéré, deux lèvres d'étanchéité sensiblement identiques sont prévues dans la portion 112, ces lèvres d'étanchéité 114 se succédant axialement.

Toujours selon ce premier exemple de mise en oeuvre du bouchon 100, ce dernier comprend une portion 125 disposée axialement au-delà de l'extrémité axiale 130 de la partie axiale 42 du deuxième support de lamelles d'entrée 44. Cette portion 125 comprend dans l'exemple considéré un bord 127 venant en contact avec ladite extrémité axiale 130 de la partie axiale 42 du deuxième support de lamelles d'entrée 44.

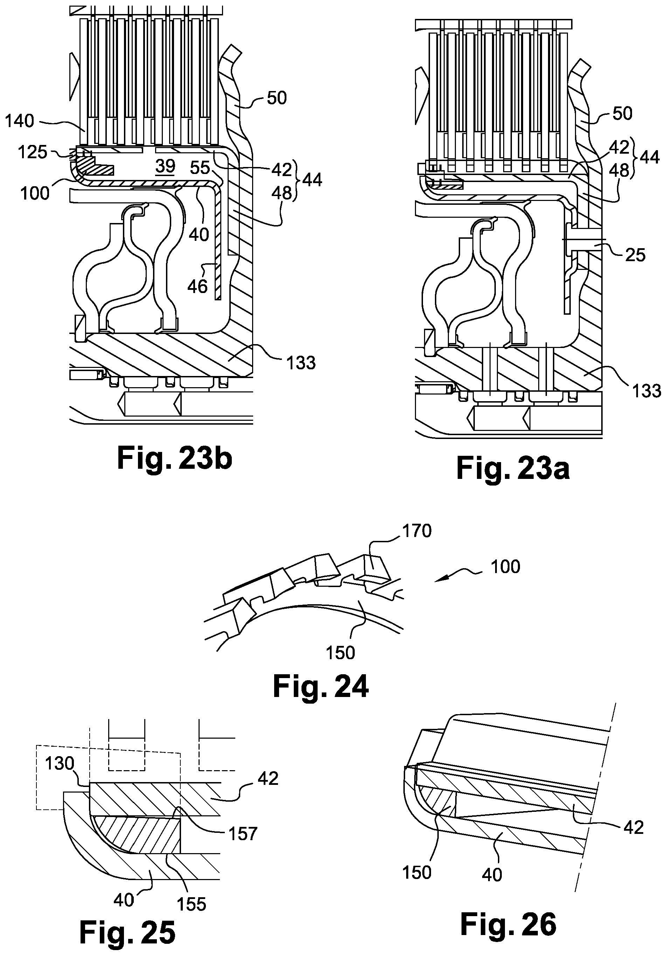

Cette portion 125 peut ne pas faire saillie radialement au-delà du deuxième support de lamelles d'entrée 44. En variante, comme représenté sur la figure 23, cette portion 125 peut, en plus de s'étendre axialement au-delà de l'extrémité axiale 130 de la partie axiale 42 du deuxième support de lamelles d'entrée 44, s'étendre également radialement au-delà de ce deuxième support de lamelles d'entrée 44. Cette portion 125, qui est alors avantageusement déformable élastiquement, peut s'appliquer contre la face extérieure de la deuxième lamelle d'entrée d'extrémité 140 en contact avec le deuxième plateau de pression. Comme déjà mentionné en rapport avec le premier embrayage 2, la raideur de la portion 125 élastiquement déformable peut être choisie de manière à être inférieure à la raideur du ressort disposé entre deux deuxièmes lamelles d'entrée 140 du deuxième embrayage 3.

Les figure 23a et 23b représentent en partie le deuxième embrayage 3 muni du bouchon 100 qui vient d'être décrit, respectivement dans un plan coupant une rainure du deuxième support de lamelles d'entrée 44 et dans un plan coupant une nervure de ce deuxième support de lamelles d'entrée 44.Les figures 23a et 23b montrent, similairement aux figures 10a, 10b et 16, le parcours de l'huile à travers le deuxième embrayage 3 depuis un moyeu creux 133 solidaire du deuxième plateau de réaction 50 jusqu'aux deuxièmes lamelles d'entrée 140.

On va maintenant décrire en référence aux figures 24 à 29 un deuxième exemple de mise en oeuvre de bouchon 100 pour le deuxième embrayage 3.

Selon ce deuxième exemple, le bouchon 100 est disposé axialement au-delà du passage 67 le plus éloigné du deuxième plateau de réaction 50, de manière à empêcher le liquide circulant dans le canal 39 de s'écouler axialement au-delà de ce passage 67.

Le bouchon 100 comprend dans cet exemple une portion 150 s'étendant axialement en deça de l'extrémité axiale 130 de la partie axiale 42 du deuxième support de lamelles d'entrée 44. Cette portion s'étend ici tout autour de l'axe X, comme on peut le voir sur la figure 24. Cette portion 150 est visible sur les figures 25 et 26 qui représentent en coupe : le bouchon 100, la partie axiale 42 du deuxième support de lamelles d'entrée 44, et la partie axiale 40 de la jupe 41 au niveau d'une rainure du deuxième support de lamelles d'entrée 44.

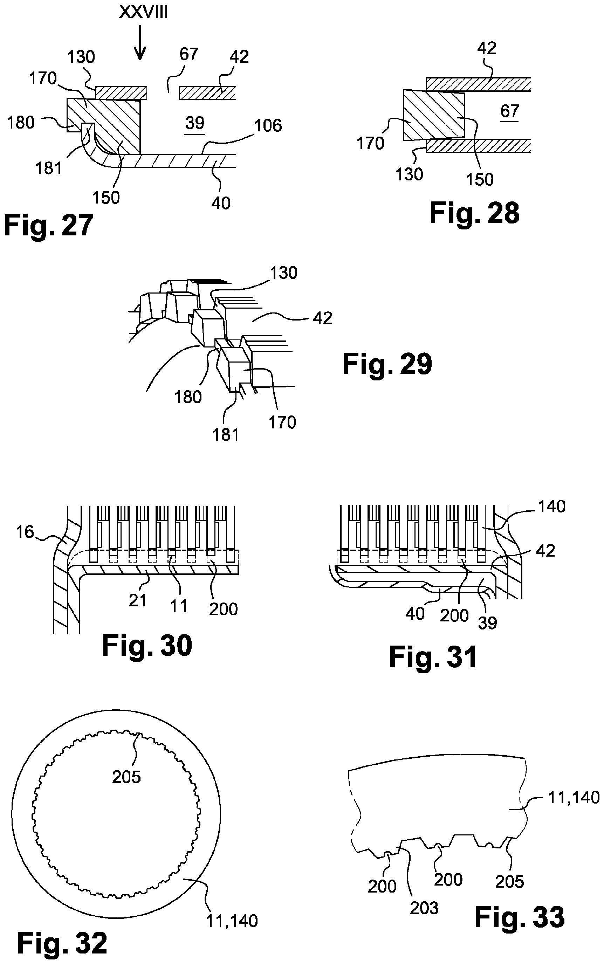

Cette portion 150 est également visible sur les figures 27 et 28 qui représentent respectivement en coupe et en vue de dessus selon XVIII : le bouchon 100, la partie axiale 42 du deuxième support de lamelles 44 et la partie axiale 40 de la jupe 41 au niveau d'une nervure du deuxième support de lamelles d'entrée 44.

Comme représenté sur les figures 25 et 27, cette portion 150 présente un bord radialement intérieur 155 en contact avec le bord radialement intérieur 106 de la partie axiale 40 de la jupe 41. Cette portion 150 présente en outre un bord radialement extérieur 157 sensiblement conique, de manière à établir un contact linéique avec le bord radialement intérieur 103 de la partie axiale 42 du deuxième support de lamelles d'entrée 44.

Le bouchon 100 selon ce deuxième exemple de mise en oeuvre comprend encore une portion 170 s'étendant axialement au-delà de l'extrémité axiale 130 de la partie axiale 42 du deuxième support de lamelles d'entrée 44. Comme on peut le voir notamment sur la figure 24, cette portion 170 s'étend de façon discontinue autour de l'axe X, cette portion 170 étant par exemple formée par une pluralité de bras distincts. La portion 170 peut s'étendre axialement au-delà de l'extrémité axiale 180 de la partie axiale 40 de la jupe 41. La portion 170 présente comme on peut le voir sur les figures 27 et 29 un retour radial 181 vers l'axe X, ce retour 181 permettant un accrochage du bouchon 100 sur la jupe 41.

Selon l'un ou l'autre des exemples de mise en oeuvre du bouchon 100, ce dernier peut être réalisé en élastomère, par exemple en Viton^{R}. Le bouchon 100 peut encore être réalisé en matière(s) plastique(s), par exemple en PA46-GF15 ou en PA66-GF30.

On va maintenant décrire en référence aux figures 30 à 33 une partie d'un premier et d'un deuxième embrayage pouvant être ceux décrits en référence aux figures précédentes.

La figure 30 représente une partie d'un premier embrayage pour double embrayage, étant par exemple le premier embrayage 2 décrit en référence aux figures 3 à 16, la figure 31 représente une partie d'un deuxième embrayage pour double embrayage, étant par exemple le double embrayage 3 décrit en référence aux figures 17 à 29. La figure 32 représente de façon isolée une lamelle d'entrée de l'un du premier et du deuxième embrayage tandis que la figure 33 représente un détail de la figure 32.

Comme on peut le voir sur la figure 30, des ouvertures 200 sont ménagées dans chaque première lamelle d'entrée intermédiaire 11, c'est-à-dire autre qu'une première lamelle d'entrée d'extrémité, cette dernière interagissant avec l'un du premier plateau de pression 14 et du premier plateau de réaction 16. Grâce à ces ouvertures 200, du liquide peut se déplacer d'une première lamelle d'entrée d'extrémité 11 à l'autre. De tels passages sont également ménagés dans chaque première lamelle intermédiaire 140 du deuxième embrayage.

Comme représenté sur les figures 32 et 33, ces ouvertures sont ménagées dans les nervures 203 ménagées dans le bord radialement intérieur 205 des lamelles d'entrée intermédiaires 11 ou 140.

Afin de confiner le liquide dans l'espace occupé par les lamelles, les premières lamelles d'entrée d'extrémité, ainsi que les deuxièmes lamelles d'entrée d'extrémité, sont dépourvues de telles ouvertures 200.

L'invention n'est pas limitée aux exemples qui viennent d'être décrits.

On peut par exemple combiner des caractéristiques décrites en rapport avec un exemple de mise en oeuvre de l'invention avec des caractéristiques décrites en rapport avec un autre exemple de mise en oeuvre de l'invention. Par exemple, le bouchon 70 pour le premier embrayage 2 décrit en référence aux figures 3 à 16 peut comprendre une ou plusieurs lèvres d'étanchéité similaires aux lèvres d'étanchéité 114 décrites en référence aux figures 18 à 23.

Le bouchon 100 selon les figures 24 à 29 peut également comprendre une ou plusieurs lèvres d'étanchéité similaires aux lèvres d'étanchéité 114.

L'expression « comprenant un » doit être comprise comme synonyme de l'expression « comprenant au moins un », sauf lorsque le contraire est spécifié.

## Revendications

1. Premier embrayage (2) pour double embrayage humide (1), comprenant :
- un organe menant (7) mobile en rotation autour d'un axe (X) et comprenant une partie axiale (20),
- un premier support de lamelles d'entrée (10), solidaire de l'organe menant (7) et comprenant une partie axiale (21) qui est radialement au-delà de la partie axiale (20) de l'organe menant (7), de manière à ce que ces deux parties axiales (20, 21) définissent entre elles un canal (24) apte à être parcouru par du liquide,
- une pluralité de premières lamelles d'entrée (11) portées par le premier support de lamelles d'entrée (10) et aptes à venir au contact de premières lamelles de sortie (13) portées par un premier support de lamelles de sortie (12) solidaire d'un premier organe mené (34), le premier support de lamelles d'entrée (10) comprenant au moins un passage (60) ménagé de manière à permettre au liquide contenu dans le canal (24) de venir au contact des premières lamelles d'entrée (11), un bouchon (70, 100) disposé de manière à former une extrémité du canal (24),
**caractérisé en ce que**
le bouchon (70, 100) est distinct du premier support de lamelles d'entrée (10) et de l'organe menant (7)
et **en ce que** l'organe menant (7) entoure en partie le premier embrayage (2).

2. Premier embrayage selon la revendication 1, le premier support de lamelles d'entrée (10) comprenant une pluralité de passages (60) se succédant sur un pourtour dudit support (10), ce pourtour présentant une alternance de nervures (65) et de rainures (66).

3. Premier embrayage selon la revendication 1 ou 2, le bouchon (70) comprenant une portion (71) disposée axialement au niveau du passage (60), chaque zone de ladite portion (71) radialement en regard d'un passage (60) étant disposée à distance de ce passage (60), de manière à permettre au liquide présent dans le canal (24) de s'écouler dans le passage (60).

4. Premier embrayage selon la revendication 3, ladite portion (71) du bouchon (70) étant au contact du bord radialement extérieur (73) de la partie axiale (20) de l'organe menant (7).

5. Premier embrayage selon la revendication 3 ou 4, le bouchon (70) comprenant une portion (79) disposée axialement au-delà du passage (60), de manière à empêcher le liquide circulant dans le canal (24) de s'écouler axialement au-delà de ce passage.

6. Premier embrayage selon la revendication 5, ladite portion (79) comprenant un bord (87) en contact avec le bord radialement intérieur (75) de la partie axiale (21) du premier support de lamelles d'entrée (10).

7. Premier embrayage selon la revendication 6, ladite portion (79) comprenant un bord (82) à distance du bord radialement extérieur (73) de la partie axiale (20) de l'organe menant (7).

8. Premier embrayage selon l'une quelconque des revendications 1 à 7, le bouchon (70) comprenant une portion (85) s'étendant axialement au-delà de l'extrémité axiale (86) de la partie axiale (21) du premier support de lamelles d'entrée (10), ladite portion (85) comprenant un bord (87) en contact avec ladite extrémité axiale (86) de la partie axiale (21) du premier support de lamelles d'entrée (10).

9. Premier embrayage selon la revendication 1 ou 2, le bouchon (70) étant disposé axialement au-delà du passage (60), de manière à empêcher le liquide circulant dans le canal de s'écouler axialement au-delà de ce passage (60).

10. Premier embrayage selon la revendication 9, le bouchon (70) étant disposé axialement au-delà de l'extrémité axiale (86) de la partie axiale (21) du premier support de lamelles d'entrée (10) et obturant l'espace entre cette extrémité (86) et le bord radialement extérieur (73) de l'organe menant (7).

11. Premier embrayage selon la revendication 9, le bouchon (70) comprenant :
- une portion (90) disposée axialement au-delà de l'extrémité axiale (86) de la partie axiale (21) du premier support de lamelles d'entrée (10) et obturant l'espace entre cette extrémité (86) et le bord radialement extérieur (73) de l'organe menant (7), et
- une portion (91) disposée radialement en regard de l'extrémité axiale (86) de la partie axiale (21) du premier support de lamelles d'entrée (10), ladite portion (91) s'étendant de façon discontinue autour de l'axe (X) et coopérant avec des rainures ménagées dans le bord radialement intérieur (75) dudit premier support de lamelles d'entrée (10).

12. Premier embrayage selon l'une quelconque des revendications 9 à 11, le bouchon (70) comprenant une portion élastiquement déformable (94) apte à s'appliquer contre la face d'extrémité d'une première lamelle d'entrée (11), ladite lamelle d'entrée étant apte à être pressée par un premier plateau de pression (14) du premier embrayage (2).

13. Premier embrayage selon l'une quelconque des revendications précédentes, les premières lamelles d'entrée (11) comprenant :
- une première lamelle d'extrémité (11) apte à venir au contact d'un plateau de pression (14) du premier embrayage (2),
- une première lamelle d'extrémité (11) apte à venir au contact d'un premier plateau de réaction (16) de l'embrayage (3), et
- des premières lamelles intermédiaires (11) interposées axialement entre lesdites premières lamelles d'extrémité (11),
du liquide pouvant se déplacer d'une première lamelle d'extrémité (11) à l'autre grâce à des ouvertures (200) ménagées dans les premières lamelles intermédiaires (11), tout en restant confiné dans l'espace axial délimité par lesdites premières lamelles d'extrémité (11).

14. Premier embrayage selon la revendication 13, chaque première lamelle (11) s'étendant tout autour de l'axe (X) et présentant un bord radialement intérieur (205) présentant une alternance de rainures et de nervures (203).

15. Premier embrayage selon la revendication 14, des nervures (203) de premières lamelles intermédiaires (11) étant munies de cavités définissant lesdites ouvertures (200).

16. Premier embrayage selon la revendication 14 ou 15, les nervures (203) des premières lamelles d'extrémité (11) étant dépourvues de cavité, de sorte qu'un passage du liquide au travers de ces dernières n'est pas possible.

17. Double embrayage humide (1) comprenant un premier embrayage (2) selon l'une quelconque des revendications précédentes.

## Patentansprüche

1. Erste Kupplung (2) für Nass-Doppelkupplung (1), die Folgendes umfasst:
- ein bewegliches führendes Organ (7), das um eine Achse (X) drehbar ist und einen axialen Teil (20) aufweist,
- einen ersten Eingangslamellenträger (10), der mit dem führenden Organ (7) fest verbunden ist und einen axialen Teil (21) aufweist, der sich radial jenseits des axialen Teils (20) des führenden Organs (7) befindet, derart, dass diese beiden axialen Teile (20, 21) zwischen sich einen Kanal (24) definieren, durch den Flüssigkeit fließen kann,
- mehrere erste Eingangslamellen (11), die durch den ersten Eingangslamellenträger (10) getragen werden und mit ersten Ausgangslamellen (13), die von einem ersten Ausgangslamellenträger (12) getragen werden, der mit einem ersten geführten Organ (34) fest verbunden ist, in Kontakt gelangen können,
wobei der erste Eingangslamellenträger (10) wenigstens einen Durchlass (60) aufweist, der in der Weise ausgebildet ist, dass der Flüssigkeit, die in dem Kanal (24) enthalten ist, ermöglicht wird, mit ersten Eingangslamellen (11) in Kontakt zu gelangen, einen Stopfen (70, 100), der in der Weise angeordnet ist, dass ein Ende des Kanals (24) gebildet wird, **dadurch gekennzeichnet, dass** der Stopfen (70, 100) von dem ersten Eingangslamellenträger (10) und von dem führenden Organ (7) verschieden ist und dass das führende Organ (7) die erste Kupplung (2) teilweise umgibt.

2. Erste Kupplung nach Anspruch 1, wobei der erste Eingangslamellenträger (10) mehrere Durchlässe (60) aufweist, die längs eines Umfangs des Trägers (10) aufeinander folgen, wobei dieser Umfang einen Wechsel von Stegen (65) und Rillen (66) aufweist.

3. Erste Kupplung nach Anspruch 1 oder 2, wobei der Stopfen (70) einen Abschnitt (71) umfasst, der axial auf Höhe des Durchlasses (60) angeordnet ist, wobei jede Zone des Abschnitts (71), die sich radial gegenüber einem Durchlass (60) befindet, in einem Abstand von diesem Durchlass (60) angeordnet ist, derart, dass der Flüssigkeit, die in dem Kanal (24) enthalten ist, ermöglicht wird, in den Durchlass (60) abzufließen.

4. Erste Kupplung nach Anspruch 3, wobei der Abschnitt (71) des Stopfens (70) mit dem radial äußeren Rand (73) des axialen Teils (20) des führenden Organs (7) in Kontakt ist.

5. Erste Kupplung nach Anspruch 3 oder 4, wobei der Stopfen (70) einen Abschnitt (79) umfasst, der axial jenseits des Durchlasses (60) angeordnet ist, derart, dass verhindert wird, dass Flüssigkeit, die in dem Kanal (24) zirkuliert, axial über diesen Durchlass hinaus abfließt.

6. Erste Kupplung nach Anspruch 5, wobei der Abschnitt (79) einen Rand (87) aufweist, der mit dem radial inneren Rand (75) des axialen Teils (21) des ersten Eingangslamellenträgers (10) in Kontakt ist.

7. Erste Kupplung nach Anspruch 6, wobei der Abschnitt (79) einen Rand (82) in einem Abstand zu dem radial äußeren Rand (73) des axialen Teils (20) des führenden Organs (7) umfasst.

8. Erste Kupplung nach einem der Ansprüche 1 bis 7, wobei der Stopfen (70) einen Abschnitt (85) umfasst, der sich axial über das axiale Ende (86) des axialen Teils (21) des ersten Eingangslamellenträgers (10) hinaus erstreckt, wobei der Abschnitt (85) einen Rand (87) aufweist, der mit dem axialen Ende (86) des axialen Teils (21) des ersten Eingangslamellenträgers (10) in Kontakt ist.

9. Erste Kupplung nach Anspruch 1 oder 2, wobei der Stopfen (70) axial jenseits des Durchlasses (60) angeordnet ist, derart, dass verhindert wird, dass Flüssigkeit, die in dem Kanal zirkuliert, axial über diesen Durchlass (60) hinaus abfließt.

10. Erste Kupplung nach Anspruch 9, wobei der Stopfen (70) axial jenseits des axialen Endes (86) des axialen Teils (21) des ersten Eingangslamellenträgers (10) angeordnet ist und den Raum zwischen diesem Ende (86) und dem radial äußeren Rand (73) des führenden Organs (7) verschließt.

11. Erste Kupplung nach Anspruch 9, wobei der Stopfen (70) Folgendes umfasst:
- einen Abschnitt (90), der axial jenseits des axialen Endes (86) des axialen Teils (21) des ersten Eingangslamellenträgers (10) angeordnet ist und den Raum zwischen diesem Ende (86) und dem radial äußeren Rand (73) des führenden Organs (7) verschließt, und
- einen Abschnitt (91), der radial gegenüber dem axialen Ende (86) des axialen Teils (21) des ersten Eingangslamellenträgers (10) angeordnet ist, wobei sich der Abschnitt (91) diskontinuierlich um die Achse (X) erstreckt und mit den Rillen zusammenwirkt, die in dem radial inneren Rand (75) des ersten Eingangslamellenträgers (10) ausgebildet sind.

12. Erste Kupplung nach einem der Ansprüche 9 bis 11, wobei der Stopfen (70) einen elastisch verformbaren Abschnitt (94) umfasst, der gegen die Fläche des Endes einer ersten Eingangslamelle (11) zur Anlage kommen kann, wobei die Eingangslamelle durch eine erste Druckplatte (14) der ersten Kupplung (2) zusammengedrückt werden kann.

13. Erste Kupplung nach einem der vorhergehenden Ansprüche, wobei die ersten Eingangslamellen (11) Folgendes umfassen:
- eine erste Endlamelle (11), die mit einer Druckplatte (14) der ersten Kupplung (2) in Kontakt gelangen kann,
- eine erste Endlamelle (11), die mit einer ersten Reaktionsplatte (16) der Kupplung (3) in Kontakt gelangen kann, und
- erste Zwischenlamellen (11), die axial zwischen den ersten Endlamellen (11) angeordnet sind,
wobei sich Flüssigkeit aufgrund der in den ersten Zwischenlamellen (11) ausgebildeten Öffnungen (200) von einer ersten Endlamelle (11) zur nächsten fortbewegen kann, während sie in dem axialen Raum, der durch die ersten Endlamellen (11) begrenzt wird, eingeschlossen bleibt.

14. Erste Kupplung nach Anspruch 13, wobei sich jede erste Lamelle (11) um die Achse (X) ringsherum erstreckt und einen radial inneren Rand (205) aufweist, der einen Wechsel von Rillen und Stegen (203) aufweist.

15. Erste Kupplung nach Anspruch 14, wobei Stege (203) von ersten Zwischenlamellen (11) mit Hohlräumen versehen sind, die die Öffnungen (200) definieren.

16. Erste Kupplung nach Anspruch 14 oder 15, wobei die Stege (203) der ersten Endlamellen (11) keine Hohlräume aufweisen, so dass ein Durchströmen der Flüssigkeit durch diese Letzteren nicht möglich ist.

17. Nass-Doppelkupplung (1), die eine erste Kupplung (2) nach einem der vorhergehenden Ansprüche umfasst.

## Claims

1. First clutch (2) for a dual wet clutch (1), comprising:
- a driving member (7) with mobility of rotation about an axis (X) and comprising an axial part (20),
- a first input lamellae support (10), which is secured to the driving member (7) and comprises an axial part (21) which is radially beyond the axial part (20) of the driving member (7) so that these two axial parts (20, 21) between them define a canal (24) through which fluid can travel,
- a plurality of first input lamellae (11) borne by the first input lamellae support (10) and able to come into contact with first output lamellae (13) which are borne by a first output lamellae support (12) secured to a first driven member (34),
the first input lamellae support (10) comprising at least one passage (60) formed in such a way as to allow the liquid contained in the canal (24) to come into contact with the first input lamellae (11), a plug (70, 100) arranged in such a way as to form one end of the canal (24), **characterized in that** the plug (70, 100) is separate from the first input lamellae support (10) and from the driving member (7), and **in that** the driving member (7) partially surrounds the first clutch (2).

2. First clutch according to Claim 1, the first input lamellae support (10) comprising a plurality of passages (60) following on from one another around a periphery of the said support (10), this periphery exhibiting an alternation of ribs (65) and of grooves (66).

3. First clutch according to Claim 1 or 2, the plug (70) comprising a portion (71) arranged axially at the level of the passage (60), each zone of the said portion (71) radially facing a passage (60) being situated a distance away from this passage (60) so as to allow the liquid present in the canal (24) to flow into the passage (60).

4. First clutch according to Claim 3, the said portion (71) of the plug (70) being in contact with the radially outer edge (73) of the axial part (20) of the driving member (7).

5. First clutch according to Claim 3 or 4, the plug (70) comprising a portion (79) arranged axially beyond the passage (60) so as to prevent the liquid circulating in the canal (24) from flowing axially beyond this passage.

6. First clutch according to Claim 5, the said portion (79) comprising an edge (87) in contact with the radially inner edge (75) of the axial part (21) of the first input lamellae support (10).

7. First clutch according to Claim 6, the said portion (79) comprising an edge (82) a distance away from the radially outer edge (73) of the axial part (20) of the driving member (7).

8. First clutch according to any one of Claims 1 to 7, the plug (70) comprising a portion (85) extending axially beyond the axial end (86) of the axial part (21) of the first input lamellae support (10), the said portion (85) comprising an edge (87) in contact with the said axial end (86) of the axial part (21) of the first input lamellae support (10).

9. First clutch according to Claim 1 or 2, the plug (70) being arranged axially beyond the passage (60) so as to prevent the liquid circulating in the canal from flowing axially beyond this passage (60).

10. First clutch according to Claim 9, the plug (70) being arranged axially beyond the axial end (86) of the axial part (21) of the first input lamellae support (10), and closing off the space between this end (86) and the radially outer edge (73) of the driving member (7).

11. First clutch according to Claim 9, the plug (70) comprising:
- a portion (90) arranged axially beyond the axial end (86) of the axial part (21) of the first input lamellae support (10) and closing off the space between this end (86) and the radially outer edge (73) of the driving member (7), and
- a portion (91) arranged radially facing the axial end (86) of the axial part (21) of the first input lamellae support (10), the said portion (91) extending discontinuously about the axis (X) and collaborating with grooves formed in the radially inner edge (75) of the said first input lamellae support (10).

12. First clutch according to any one of Claims 9 to 11, the plug (70) comprising an elastically deformable portion (94) able to press against the end face of a first input lamella (11), the said input lamella being able to be pressed by a first pressure plate (14) of the first clutch (2).

13. First clutch according to any one of the preceding claims, the first input lamellae (11) comprising:
- a first end lamella (11) able to come into contact with a pressure plate (14) of the first clutch (2),
- a first end lamella (11) able to come into contact with a first reaction plate (16) of the clutch (3), and
- first intermediate lamellae (11) which are interposed axially between the said first end lamellae (11), it being possible for the liquid to move from one first end lamella (11) to the other by virtue of openings (200) formed in the first intermediate lamellae (11), while remaining confined in the axial space delimited by the said first end lamellae (11).

14. First clutch according to Claim 13, each first lamella (11) extending all around the axis (X) and having a radially inner edge (205) exhibiting an alternation of grooves and of ribs (203).

15. First clutch according to Claim 14, ribs (203) of first intermediate lamellae (11) being provided with cavities defining the said openings (200).

16. First clutch according to Claim 14 or 15, the ribs (203) of the first end lamellae (11) having no cavity, so that passage of the liquid through these end lamellae is impossible.

17. Dual wet clutch (1) comprising a first clutch (2) according to any one of the preceding claims.
